# EUROPÄISCHE PATENTSCHRIFT

(11) **EP 3 074 292 B1**
(45) Veröffentlichungstag und Bekanntmachung des Hinweises auf die Patenterteilung: **28.02.2018**
(21) Anmeldenummer: 15712096.5
(22) Anmeldetag: 17.03.2015
(51) Int. Cl.: B61L 5/00, B61L 27/00, G01M 17/08

(54) **ANORDNUNG, PRÜFSTAND UND VERFAHREN ZUR PRÜFUNG EINES WEICHENANTRIEBS**
ARRANGEMENT, TEST BENCH AND METHOD FOR TESTING A SWITCH DRIVE
AGENCEMENT, BANC D'ESSAI ET PROCÉDÉ DE CONTRÔLE D'UNE COMMANDE D'AIGUILLAGE

(30) Priorität: 08.04.2014 DE 102014206784; 17.04.2014 DE 102014207457
(43) Veröffentlichungstag der Anmeldung: 05.10.2016
(73) Patentinhaber: Siemens Aktiengesellschaft, 80333 München (DE)
(72) Erfinder: DUDECK, Sven Gerhard, 81547 München (DE)
(86) Internationale Anmeldenummer: PCT/EP2015/055545
(87) Internationale Veröffentlichungsnummer: WO 2015/154953

(56) Entgegenhaltungen:
- DE-A1-102012 211 377
- DE-U1-202008 002 439
- "PT 10K Multi", , 1. September 2008 (2008-09-01), Seiten 1-2, XP055094675, Gefunden im Internet: URL:http://www.probitron.de/fileadmin/pdf/ datenblatt_multi.pdf [gefunden am 2014-01-02] in der Anmeldung erwähnt
- "Weichenstellsysteme - Richtungsweisende Technik von HANNING & KAHL", , 1. August 2010 (2010-08-01), Seiten 1-16, XP055094669, Gefunden im Internet: URL:http://www.hanning-kahl.de/fileadmin/h uk/Inhalte/Abbildungen/Produkte_Service/Ba hntechnik/Weichenstellsystem/Weichenstells ysteme_01.pdf [gefunden am 2014-01-02]
- "hastema Bahntechnik Schulung", , 6. Oktober 2006 (2006-10-06), Seiten 1-13, XP055094672, Gefunden im Internet: URL:http://www.transmetra.ch/images/storie s/pdf/sensorik/kraftsensoren/dokumente/a06 .applikation_weichenantrieb.pdf [gefunden am 2014-01-02]

## Beschreibung

Ein Weichenantrieb dient zum Umstellen des Fahrweges eines Schienenfahrzeugs am Gleis. Er besteht üblicherweise aus einem Elektromotor, dessen Drehbewegung über eine Spindel- oder Zahnstange in eine Linearbewegung umgesetzt wird. Teil des mechanischen Systems ist meist auch eine Kupplung, die eine zu große Krafteinbringung auf das Gleis verhindert.

Im Zuge der Produktion oder der Wiederaufarbeitung von Weichenantrieben müssen die vom Weichenantrieb erzeugten Kräfte abschließend eingestellt und geprüft werden. Ziel ist es unter anderem, dass die vom Weichenantrieb erzeugten Kräfte gewisse Ober- und Untergrenzen nicht über- bzw. unterschreiten. Zu diesem Zweck werden am Prüfstand Gegenkräfte, die den Kräften der Weichenzunge im späteren Betrieb entsprechen, auf den Weichenantrieb als Prüfling aufgebracht, während dieser auf dem Prüfstand Stellvorgänge ausführt.

Die mechanischen Abmaße der Weichenantriebe unterscheiden sich je nach Einsatzgebiet, Hersteller und Entwicklungshistorie sehr stark. Nach außen hin gemeinsam ist allen Weichenantrieben der sogenannte Stellschieber, der die lineare Bewegung und Kraft des Antriebes auf die Weichenzunge überträgt sowie (optional) die sogenannten Prüfschieber, die ebenfalls mit der Weichenzunge verbunden sind und eine mechanische Rückmeldung der Zungenposition an den Antrieb ermöglichen. Idealerweise wird der Weichenantrieb für die Prüfung auf die gleiche Art und Weise befestigt wie später am Gleis (meist über mehrere Verschraubungen). Aufgrund der unterschiedlichen Außenmaße der Antriebe befinden sich die beiden beweglichen Komponenten relativ zu den Befestigungspunkten des Weichenantriebes an unterschiedlichen Positionen.

Aus dem Dokument "PT 10K Multi: Variabler Prüftisch für Weichenstellantriebe", erhältlich im Internet am 31.03.2014 unter http://www.probitron.de/fileadmin/pdf/datenblatt_multi. pdf, ist ein variabler Prüftisch für Weichenantriebe bekannt, welcher aus einem Grundmodul und austauschbaren Prüfmodulen besteht. Das Grundmodul verfügt über eine Hydraulikanlage als Krafterzeuger, eine Steuerung sowie Mess- und Sicherheitstechnik. Für unterschiedliche Modelle von Weichenantrieben stehen individuelle Prüfmodule zur Verfügung, welche laut Abbildung jeweils aus einem Tisch mit Rollen und individuell auf den Weichenantrieb zugeschnittenen Positionshaltern bestehen. Die Anpassung des Kopplungspunktes zwischen Prüfling und Prüfstand-Krafterzeugung erfolgt somit durch Montage des Prüflings auf einem individuell auf den Prüfling zugeschnittenen Prüfmodul.

Ein Prüfschieber meldet dem Weichenantrieb mechanisch die tatsächliche Position der Weichenzunge zurück. Für eine Prüfung des Prüfschiebers müsste dieser gleichzeitig zum Stellschieber bewegt werden. Die Bewegung von Stellschieber und Prüfschieber erfolgt dabei jedoch nicht synchron; auch ist die Weglänge unterschiedlich. Deshalb wird im Stand der Technik auf eine Komplettprüfung des Weichenantriebs inkl. der Prüfschieber verzichtet, da der Weichenantrieb ohne eingebaute Prüfschieber getestet wird. Erst nach dem Test werden die Prüfschieber eingebaut.

Es stellt sich die Aufgabe, eine Anordnung anzugeben, welche eine Alternative zum Stand der Technik bereitstellt.

Diese Aufgabe wird erfindungsgemäß durch eine Anordnung gelöst, welche ein horizontales Bauteil aufweist, welches auf mindestens einer horizontalen Linearführung verfahrbar gelagert ist. Die Anordnung umfasst ferner ein vertikales Bauteil, welches senkrecht auf dem horizontalen Bauteil montiert ist, quer zu der horizontalen Linearführung ausgerichtet ist und eine Aussparung aufweist, welche parallel zur horizontalen Linearführung eine Durchführung eines Objekts erlaubt. Das vertikale Bauteil ist an einer Mehrzahl von Kopplungspositionen eingerichtet, eine Verbindung mit einem Befestigungsfuß einzugehen. Der Befestigungsfuß ist mit einem Prüfschieber eines Weichenantriebs verbunden. Ein Stellschieber eines Weichenantriebs oder ein an den Stellschieber des Weichenantriebs gekoppeltes Bauelement ist durch die Aussparung in dem vertikalen Bauelement geführt.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden.

Die horizontale Linearführung ist beispielsweise als beidseitige parallele Führung ausgestaltet. Sie kann um einen Linearantrieb ergänzt werden. Die Anordnung eignet sich in einer Weiterbildung zur Komplettprüfung eines Weichenantriebs auf einem Prüfstand. Hierzu wird ein Stellschieber des zu prüfenden Weichenantriebs durch die Aussparung im vertikalen Bauteil der Anordnung geführt. Weiterhin wird ein Prüfschieber des Weichenantriebs mit dem vertikalen Bauteil der Anordnung verbunden. Da das horizontale Bauteil als Schlitten oder Wagen auf der horizontalen Linearführung verfahrbar ist, kann eine Kopplungsposition für den Prüfschieber entlang seiner Arbeitsrichtung frei gewählt werden. Weiterhin erlaubt es die Anordnung in dieser Weiterbildung, Stellschieber und Prüfschieber unabhängig voneinander zu bewegen.

Die Einbauposition bzw. Kopplungsposition des Prüfschiebers kann mittels der Weiterbildung der Anordnung am Prüfstand variiert werden. Unabhängig von der Verschiebung des horizontalen Bauteils in Längsrichtung des Prüfschiebers ist auch eine Mehrzahl von Kopplungspositionen auf der Oberfläche des vertikalen Bauteils, also somit in den anderen beiden Dimensionen möglich. Im Ergebnis kann eine Kopplungsposition für den Prüfschieber im dreidimensionalen Raum gewählt werden. Die Anordnung ermöglicht somit eine flexible Adaptierung des Prüfschiebers an den Prüfstand. Der Weichenantrieb kann daher im finalen Zustand geprüft werden, da der Prüfschieber für die Prüfung auf dem Prüfstand nicht vorab ausgebaut und erst nach der Prüfung wieder eingesetzt werden muss. Ein separates Prüfen des Prüfschiebers auf seine Funktion und seine Hochspannungsfestigkeit kann somit entfallen. Im Anschluss an die Prüfung sind keine weiteren Schritte am Weichenantrieb notwendig.

Der Befestigungsfuß bietet den Vorteil, dass der Prüfschieber eines Weichenantriebs einfach am vertikalen Bauteil montiert werden kann. Die Kopplungspositionen liegen auf einer Oberfläche des vertikalen Bauteils, welche senkrecht zu der horizontalen Linearführung ausgerichtet ist.

In einer Weiterbildung ist das vertikale Bauteil aus magnetisierbarem Material ausgeführt. Der Befestigungsfuß ist hierbei ein Magnetfuß. Diese Weiterbildung bietet den Vorteil, dass der Magnetfuß auf dem vertikalen Bauteil mit sehr hoher Genauigkeit an nahezu beliebigen Positionen befestigt werden kann.

Gemäß einer Ausführungsform ist das vertikale Bauteil als Lochplatte ausgeführt, welche ein Verschrauben des Befestigungsfußes erlaubt. Beispielsweise sind die Löcher der Lochplatte mit einem Gewinde versehen, so dass der Befestigungsfuß unmittelbar in der Lochplatte verschraubt wird. Alternativ wird eine Gewindestange des Befestigungsfußes durch eines der Löcher geführt und mit einer Mutter auf der Gegenseite fixiert.

In einer Weiterbildung ist das vertikale Bauteil als Rahmen ausgeführt, welcher quer zur horizontalen Linearführung auf dem horizontalen Bauteil verfahrbar ist. Da der Rahmen bauformbedingt eine große rechteckige Aussparung aufweist, ermöglicht diese Weiterbildung eine besonders flexible Durchführung eines Stellschiebers eines Weichenantriebs.

Gemäß einer Ausführungsform weist mindestens eine Seite, insbesondere beide Seiten, des Rahmens eine vertikale Führung auf, auf welcher der Befestigungsfuß verfahrbar ist. Dies ermöglicht es, auf eine Verschraubung des Befestigungsfußes zu verzichten und diesen flexibel einzustellen.

In einer Weiterbildung ist der Befestigungsfuß auf der vertikalen Führung durch manuelles Verschieben verfahrbar. Der Befestigungsfuß ist hierzu mit einem Bedienelement, insbesondere einem Knopf ausgestattet. Die Anordnung ist mechanisch oder elektrisch eingerichtet zur Aufhebung einer Klemmung des Befestigungsfußes an den Rahmen und Aufhebung einer Klemmung des Rahmens an das horizontale Bauteil bei Betätigung des Bedienelementes. Weiterhin ist die Anordnung mechanisch und/oder elektrisch eingerichtet zur Klemmung des Befestigungsfußes an den Rahmen und zur Klemmung des Rahmens an das horizontale Bauteil, bei erneuter Betätigung des Bedienelementes oder Loslassen des Bedienelementes.

Diese Weiterbildung bietet den Vorteil, dass der Befestigungsfuß auf dem Rahmen mit einem einzigen Griff in mindestens zwei Dimensionen flexibel eingestellt werden kann. Das Bedienelement ermöglicht zum einen eine einhändige Lösung der Klemmung eines vertikalen und horizontalen Schlittens auf den jeweiligen Führungen sowie zum anderen ein Festziehen der Klemmung nach händischer Einstellung der gewünschten Position.

Gemäß einer Ausführungsform weist das horizontale Bauteil einen Linearantrieb auf, welcher zum horizontalen Verfahren des Rahmens eingerichtet ist. Der Rahmen weist mindestens einen vertikalen Linearantrieb auf, welcher zum vertikalen Verfahren des Befestigungsfußes auf der vertikalen Führung eingerichtet ist. Weiterhin beinhaltet die Anordnung eine programmierbare Steuerung, mittels welcher der Befestigungsfuß durch Ansteuerung der Linearantriebe in vorab einprogrammierte Kopplungspositionen in Abhängigkeit von Typen von Weichenantrieben automatisiert verfahrbar ist.

Diese Ausführungsform bietet den Vorteil, dass der Befestigungsfuß automatisiert in die jeweils erforderliche Kopplungsposition verfahrbar ist.

In einer Weiterbildung umfasst die Anordnung mehrere Erweiterungsrahmen, welche links, rechts oder oben an dem Rahmen montierbar sind, und wobei die Erweiterungsrahmen insbesondere vormontiert und nach hinten weg klappbar sind.

Durch die Erweiterungsrahmen kann die Anordnung flexibel in zwei Dimensionen erweitert werden.

Gemäß einer Ausführungsform beinhaltet die Anordnung eine elektronische Anzeige, welche eine der Mehrzahl von Kopplungspositionen visuell kennzeichnet. Diese Ausführungsform unterstützt einen Bediener beim Auffinden der richtigen Kopplungsposition.

In einer Weiterbildung wird die elektronische Anzeige aus LED's gebildet, welche an jeder der Kopplungspositionen in das vertikale Bauteil eingelassen sind. Alternativ wird die elektronische Anzeige aus LED's gebildet, welche an mindestens zwei Rändern des vertikalen Bauteils derart angeordnet sind, dass sie Koordinaten der Kopplungspositionen visuell kennzeichnen. Als dritte Alternative ist die elektronische Anzeige ein Projektionssystem, insbesondere ein Linienlaser oder Projektor, welches zur Projektion der Kopplungspositionen auf das vertikale Bauteil eingerichtet ist. Diese Weiterbildung stellt vorteilhafte Positionierungshilfen für einen Bediener bereit.

Gemäß einer Ausführungsform beinhaltet die Anordnung eine Schaltung, insbesondere einen elektronischen Speicher, aus welcher die Kopplungspositionen in Abhängigkeit von Typen von Weichenantrieben abrufbar sind. Die Anordnung beinhaltet ferner eine Schaltung oder eine Recheneinheit, welche eingerichtet ist, nach Eingabe eines Weichenantriebs-Typs die elektronische Anzeige derart anzusteuern, dass sie die dem Weichenantrieb-Typ zugeordnete Kopplungsposition anzeigt.

Auf einem Prüfstand zur Prüfung eines Weichenantriebs ist die Anordnung montiert. Weiterhin verfügt der Prüfstand über einen Krafterzeuger, welcher eingerichtet ist, um Gegenkräfte auf den Weichenantrieb aufzubringen, während der Weichenantrieb auf dem Prüfstand Stellvorgänge ausführt, wodurch der Prüfstand zum Einstellen und/oder Prüfen von Kräften, welche der Weichenantrieb erzeugt, eingerichtet ist. Der Krafterzeuger und die Anordnung sind mechanisch und elektrisch unabhängig voneinander, so dass mittels der Anordnung ein Befestigungsfuß ohne Beeinflussung des Prüfstandes oder des Krafterzeugers positionierbar ist, wodurch eine vorgegebene Kopplungsposition für den Prüfschieber des Weichenantriebs auf dem Prüfstand einstellbar ist.

Diese Ausführungsform ermöglicht den vorteilhaften Einsatz der Anordnung auf einem Prüfstand für Weichenantriebe.

Bei dem Verfahren zum Prüfen eines Weichenantriebs ist die Anordnung auf einen Prüfstand montiert. Anhand eines Typs eines auf dem Prüfstand zu prüfenden Weichenantriebs wird eine vorgegebene Kopplungsposition für einen Prüfschieber des Weichenantriebs mit der Anordnung ermittelt. Ein Befestigungsfuß, welcher an der Anordnung vormontiert ist, wird an die vorgegebene Kopplungsposition verfahren. Alternativ wird der Befestigungsfuß an der vorgegebenen Kopplungsposition an der Anordnung montiert. Anschließend wird der Befestigungsfuß mit einem Prüfschieber eines Weichenantriebs verbunden. Ein Stellschieber des Weichenantriebs oder ein an den Stellschieber des Weichenantriebs gekoppeltes Bauelement wird durch die Aussparung in dem vertikalen Bauelement der Anordnung geführt. Abschließend bringt der Prüfstand über einen Krafterzeuger Gegenkräfte auf den Weichenantrieb auf, während der Weichenantrieb auf dem Prüfstand Stellvorgänge ausführt, wobei Kräfte, welche der Weichenantrieb erzeugt, eingestellt und/oder geprüft werden.

Vorteilhafterweise wird hierbei natürlich auch die Funktion des Prüfschiebers sowie seine Hochspannungsfestigkeit geprüft.

Die Anordnung kann zur Adaptierung eines Prüfschiebers eines Weichenantriebs an einen Prüfstand verwendet werden.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: einen Prüfstand zur Überprüfung eines Weichenantriebs, auf dem der Prüfling fest verschraubt wird,
- Figur 2: einen Prüfschieber und Stellschieber eines Weichenantriebs in Wechselwirkung mit einer Weichenzunge,
- Figur 3A: eine Seitenansicht eines Prüfstands zur Prüfung eines Weichenantriebs mit flexibler Adaptierung eines Prüfschiebers des Weichenantriebs,
- Figur 3B: eine Aufsicht auf den Prüfstand aus Figur 3A,
- Figur 3C: eine Frontansicht auf den Prüfstand aus Figur 3A und 3B, welche auf Höhe einer Anordnung zur flexiblen Adaptierung eines Prüfschiebers geschnitten ist,
- Figur 4A: eine Verschraubung eines Befestigungsfußes auf einer Lochplatte,
- Figur 4B: einen Magnetfuß auf einer magnetisierbaren Platte,
- Figur 5A: eine Frontansicht auf einen Rahmen zur flexiblen Adaptierung eines Prüfschiebers eines Weichenantriebs,
- Figur 5B: eine Seitenansicht des Rahmens aus Figur 5A,
- Figur 6A: eine Seitenansicht eines Befestigungsfußes zur Adaptierung eines Prüfschiebers eines Weichenantriebs,
- Figur 6B: eine Aufsicht auf den Befestigungsfuß aus Figur 6A,
- Figur 6C: eine Frontansicht des Befestigungsfußes aus Figur 6A, welche in Ebene A geschnitten ist,
- Figur 6D: eine Frontansicht des Befestigungsfußes aus Figur 6A, welche in Ebene B geschnitten ist,
- Figur 7A: LED's, welche in einer Platte eingelassen sind und eine geeignete Kopplungsposition signalisieren,
- Figur 7B: LED's, welche am Rand einer Platte Koordinaten für eine geeignete Kopplungsposition anzeigen,
- Figur 7C: ein projiziertes Kreuz eines Linienlasers auf einer Platte,
- Figur 8A: eine Frontansicht mit drei Erweiterungsrahmen, welche den Rahmen aus Figur 5A und Figur 5B erweitern,
- Figur 8B: eine Seitenansicht der Erweiterungsrahmen aus Figur 8A in einem eingeklappten Zustand,
- Figur 8C: eine Aufsicht auf die Erweiterungsrahmen der Figur 8A in einem eingeklappten Zustand.

In den Figuren sind gleiche oder funktionsgleiche Elemente mit denselben Bezugszeichen verstehen, sofern nichts anderes angegeben ist.

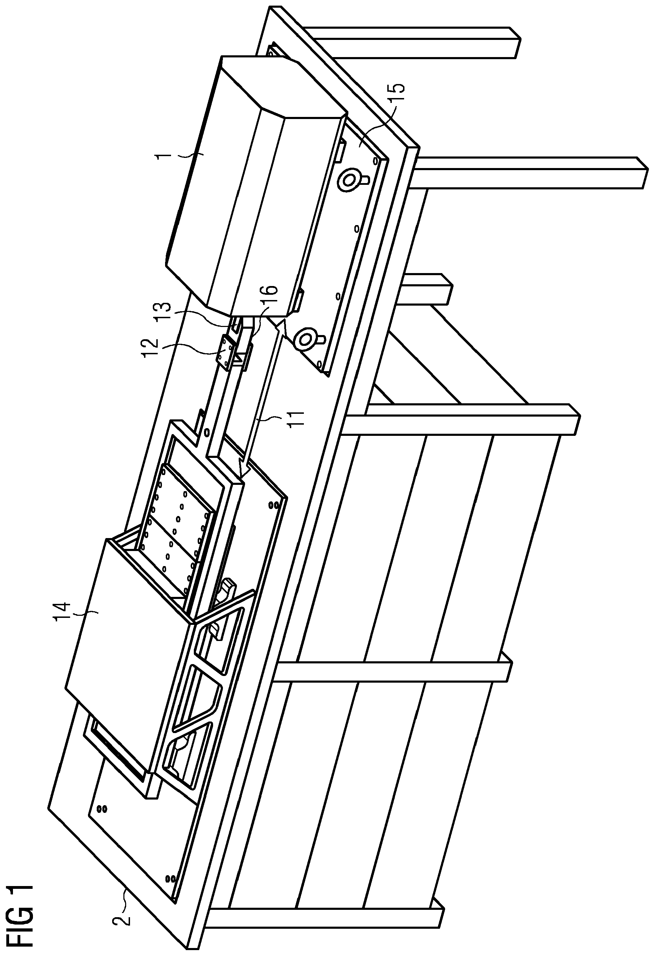

Figur 1 zeigt einen Prüfling 1, hier ein Weichenantrieb, welcher auf einer Adapterplatte 15 befestigt ist, die auf einem Prüfstand 2 verschraubt ist. Ein Stellschieber 13 wird vom Prüfling 1 in einer Kraft- und Bewegungsrichtung 11 angetrieben. Der Stellschieber 13 ist über einen Kopplungspunkt 16 an einen Krafterzeuger 14 gekoppelt, wodurch eine Kraftmessung 12 ermöglicht wird. Der Krafterzeuger 14 auf dem Prüfstand ist beispielsweise ein hydraulischer oder elektrischer Linearantrieb.

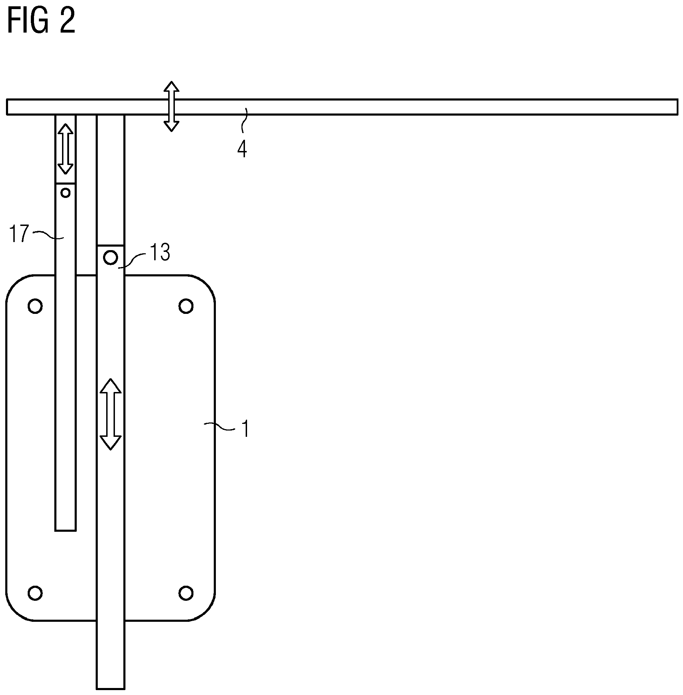

Figur 2 zeigt einen Weichenantrieb 1 entsprechend seiner Verwendung am Gleis. Über einen Stellschieber 13 bewegt der Weichenantrieb 1 eine Weichenzunge 4. Ein Prüfschieber 17 des Weichenantriebs 1 ermittelt hierbei die tatsächliche Position der Weichenzunge 4.

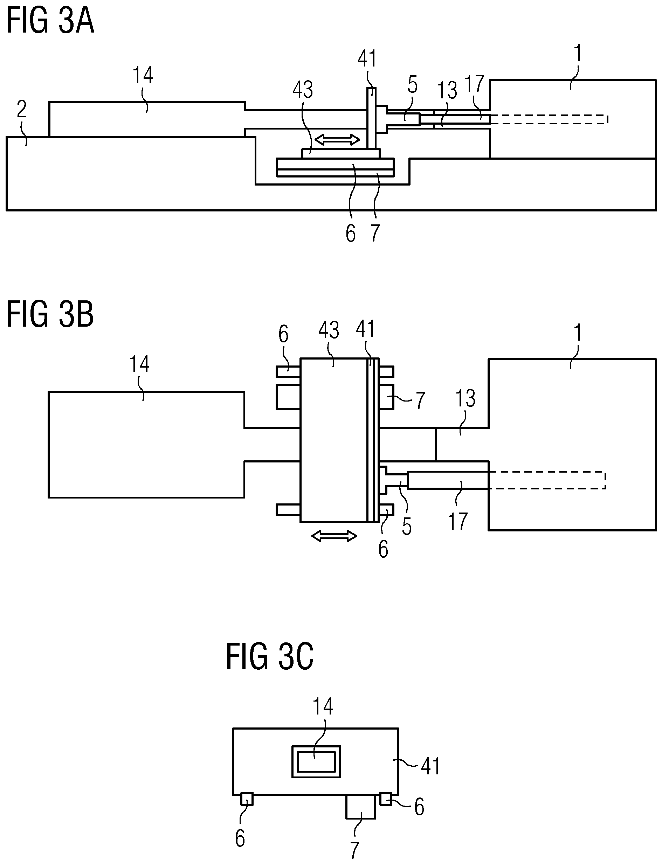

Figur 3A zeigt eine Seitenansicht eines Prüfstands 2 zur Prüfung eines Weichenantriebs 1. Zur Wartung oder Überprüfung des Weichenantriebs 1 wird ein Krafterzeuger 14 an dem Prüfstand 2 mit einem Stellschieber 13 des Weichenantriebs 1 gekoppelt. Zusätzlich soll auch der Prüfschieber 17 des Weichenantriebs 1 in die Prüfung auf dem Prüfstand eingezogen werden, so dass dieser nicht erst nach der Prüfung eingebaut werden muss. Da die Positionen des Prüfschiebers 17 je nach Modell des Weichenantriebs 1 variieren, sieht das Ausführungsbeispiel eine Platte 41 vor, welche vertikal auf einem Wagen 43 montiert ist, der wiederum auf Führungen 6 geführt und über eine Linearachse 7 angetrieben wird. Der Prüfschieber 17 wird mittels eines Befestigungsfußes 5 auf der Platte 41 montiert. Die Seitenansicht der Figur 3A zeigt hierbei, dass mittels Verfahren des Wagens 43 auf der Führung 6 durch die Linearachse 7 eine Kopplungsposition für den Prüfschieber 17 in dessen Bewegungsrichtung frei wählbar ist.

Figur 3B zeigt eine Aufsicht auf das Ausführungsbeispiel aus Figur 3A. Aus Figur 3B wird ersichtlich, dass die Kopplungsposition des Prüfschiebers 17 auf der Platte 41 auch in horizontal orthogonaler Richtung zur Fahrtrichtung des Wagens 43 frei gewählt werden kann. Hierzu muss lediglich der Befestigungsfuß 5 an einer geeigneten Position auf der Platte 41 montiert werden.

Figur 3C zeigt eine Frontansicht des Ausführungsbeispiels aus Figur 3A und Figur 3B, welche auf Höhe der Platte 41 geschnitten ist. Die Platte 41 weist eine Aussparung auf, durch welche eine Verlängerung der Krafterzeugung 14, welche mit dem Stellschieber 13 gekoppelt ist, berührungslos geführt ist. Auf der gesamten Fläche der Platte 41 ist der Befestigungsfuß für den Prüfschieber relativ frei positionierbar. Dies ermöglicht insbesondere auch unterschiedliche vertikale Positionen für den Befestigungsfuß und den Prüfschieber.

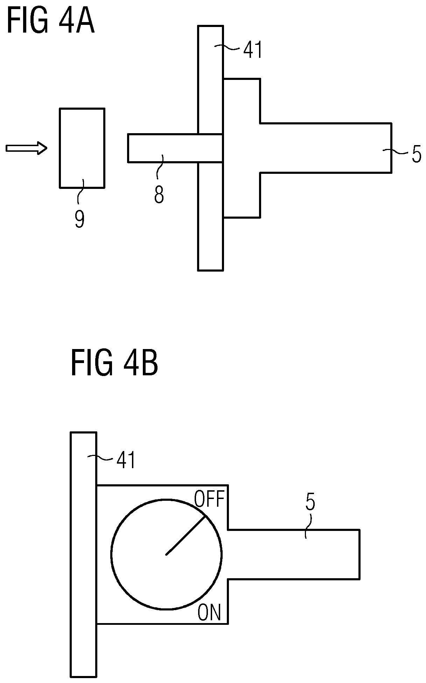

Figur 4A zeigt eine erste Alternative zur Befestigung des Befestigungsfußes 5 auf der Platte 41. Hierbei wird der Befestigungsfuß 5 auf eine Gewindestange 8 aufgeschraubt, welche durch die Platte 41, hier eine Lochplatte bzw. Lochrasterplatte, gesteckt und rückseitig mittels einer Mutter fixiert wird. Alternativ kann die Platte 41 auch Gewindebohrungen aufweisen, in welchen der Befestigungsfuß 5 unmittelbar verschraubt werden kann.

Figur 4B zeigt eine zweite Alternative, bei welcher der Befestigungsfuß 5 als Magnetfuß ausgeführt ist. Der Magnetfuß verfügt hierbei über einen Drehschalter zum Ein- und Ausschalten des Hafteffekts. Geeignete Magnetfüße sind beispielsweise für Magnetstative für Laboraufbauten oder die Metallverarbeitung bekannt.

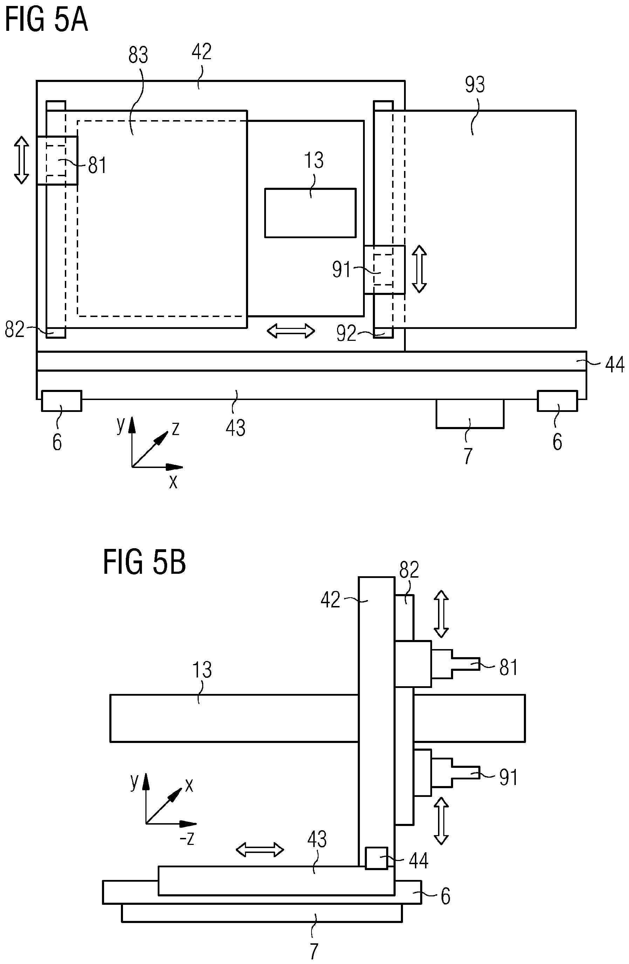

Figur 5A zeigt ein weiteres Ausführungsbeispiel zur flexiblen Adaptierung des Prüfschiebers. Die Basis bildet erneut ein Wagen 43, welcher auf Führungen 6 geführt und über eine Linearachse 7 angetrieben wird. Die Linearachse 7 ermöglicht eine automatische Positionierung des Wagens 43 in der Bewegungsrichtung des Prüfschiebers. Auf dem Wagen 43 ist auf einer horizontalen Führung 44 ein Rahmen 42 montiert, welcher quer zur Bewegungsrichtung der Linearachse 7 auf der horizontalen Führung 44 verschoben und geklemmt werden kann. Da der Rahmen 42 eine relativ große rechteckige Aussparung aufweist, kann der Stellschieber 13 bzw. dessen Kopplung mit dem Krafterzeuger 14 auf dem Prüfstand 2 berührungslos durch die Aussparung des Rahmens 42 geführt werden. Gleichzeitig ist gewährleistet, dass auch bei Verschieben des Rahmens 42 auf der horizontalen Führung 44 kein Kontakt mit dem Stellschieber 13 erfolgt.

Auf den beiden Seitenteilen des Rahmens 42 sind eine linke vertikale Führung 82 und eine rechte vertikale Führung 92 montiert. Alternativ können die Seitenteile des Rahmens 42 auch selbst als Linearführung ausgebildet sein. Auf der linken vertikalen Führung 82 ist eine linke Adaptierung 81 montiert, welche in vertikaler Richtung verschoben und geklemmt werden kann. Entsprechend ist auf der rechten vertikalen Führung 92 eine rechte Adaptierung 91 montiert, welche in vertikaler Richtung verschoben und geklemmt werden kann. Die linke Adaptierung 81 und die rechte Adaptierung 91 übernehmen hierbei die Funktion des Befestigungsfußes aus dem vorangegangenen Ausführungsbeispiel, d.h. sie dienen der Aufnahme des Prüfschiebers. Aus dem horizontalen Bewegungsspielraum des Rahmens 42 auf der Führung 44 sowie aus dem vertikalen Bewegungsspielraum der linken Adaptierung 81 auf der linken vertikalen Führung 82 ergibt sich ein linker Adaptionsbereich 83, innerhalb dessen die linke Adaptierung 81 frei positioniert werden kann. Entsprechend ergibt sich für die rechte Adaptierung 91 ein rechter Adaptionsbereich 93, in welchem die rechte Adaptierung 91 frei positioniert werden kann. Je nach Bauart des Weichenantriebs wird die linke oder die rechte Adaptierung 81, 91 in die erforderliche Kopplungsposition gebracht und mit dem Prüfschieber des Weichenantriebs verbunden.

Figur 5B zeigt das Ausführungsbeispiel aus Figur 5A in einer Seitenansicht.

Anstelle der beschriebenen manuellen Einstellmöglichkeiten für das vorliegende Ausführungsbeispiel können jeweils auch Linearantriebe zur automatisierten Positionierung der Adaptierungen 81, 91 und des Rahmens 42 zum Einsatz kommen, welche über eine Steuerung zum Anfahren vorab einprogrammierter Kopplungspositionen automatisiert angesteuert werden.

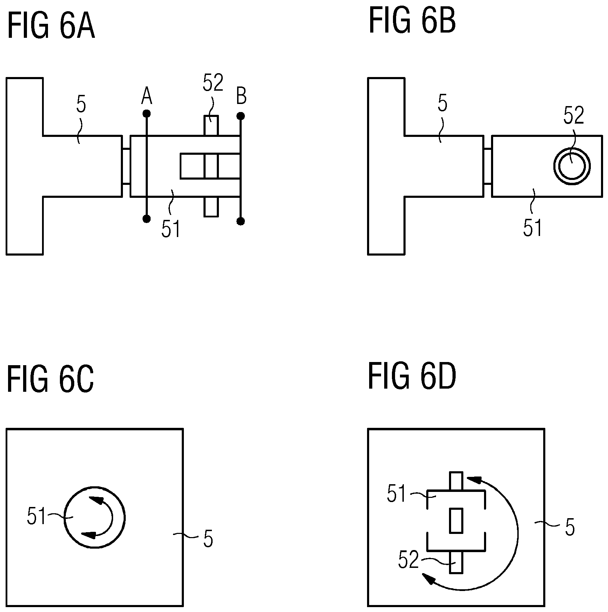

Figur 6A zeigt den Befestigungsfuß 5 der Figuren 3A, 3B, 3C, 4A, 4B bzw. die linke Adaptierung 81 und die rechte Adaptierung 91 aus Figur 5A und Figur 5B im Detail in einer Seitenansicht. Der Befestigungsfuß 5 ist hierbei mit einer Aufnahme 51 ausgerüstet, welche je nach Weichenantriebs-Typ unterschiedlich ausgeführt sein kann. Im gezeigten Ausführungsbeispiel weist die Aufnahme 51 einen Bolzen 52 auf, welcher zur Halterung des Prüfschiebers dient.

Figur 6B zeigt eine Aufsicht auf das Ausführungsbeispiel aus Figur 6A. Die Aufnahme 51 ist gegenüber dem Befestigungsfuß 5 um mindestens 90° rotierbar.

Figur 6C zeigt eine Frontansicht auf den Befestigungsfuß aus Figur 6A, welcher in der in Figur 6A gezeigten Ebene A geschnitten ist.

Figur 6D zeigt eine weitere Frontansicht des Befestigungsfußes aus Figur 6A, welcher in der in Figur 6A gezeigten Ebene B geschnitten ist.

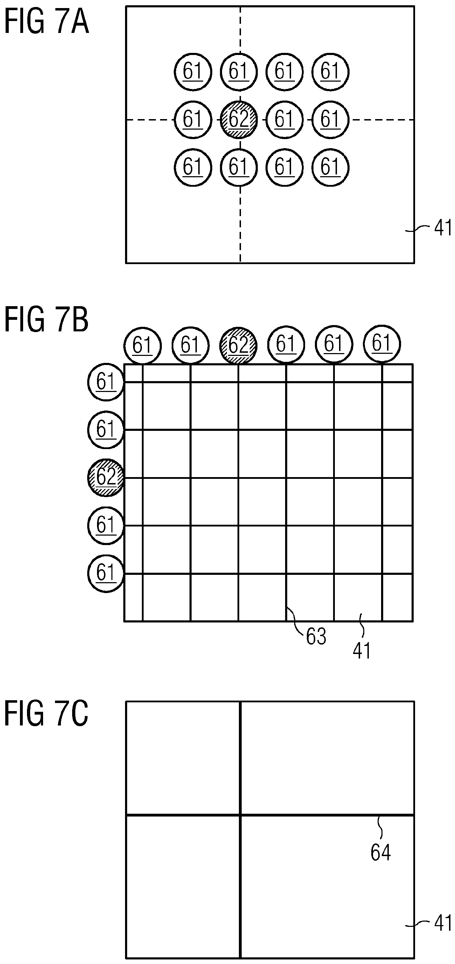

Figur 7A zeigt die Platte 41 aus den Figuren 3A, 3B, 3C, 4A, 4B, in welche LED's 61 eingelassen sind. Eine leuchtende LED 62 zeigt einen Bediener die korrekte Kopplungsposition für die Montage eines Befestigungsfußes für einen Prüfschieber eines Weichenantriebs an. Hierzu wird beispielsweise an einer Benutzerschnittstelle eines Computers der Typ des zu prüfenden Weichenantriebs eingegeben. Eine Recheneinheit entnimmt einem Speicher die dem Typ zugeordnete Kopplungsposition auf der Platte 41 und steuert die LED's 61 derart an, dass die leuchtende LED 62 an der Kopplungsposition aufleuchtet.

Figur 7B zeigt ein alternatives Ausführungsbeispiel, bei welchem die LED's 61 am Rand der Platte 41 angeordnet sind. Die leuchtenden LED's 62 zeigen hierbei Koordinaten für die richtige Kopplungsposition des Befestigungsfußes an. Zur Erleichterung der Positionierung können feine Linien als Linienmuster 63 in die Platte 41 eingraviert sein.

Figur 7C zeigt ein drittes Ausführungsbeispiel für die Visualisierung der Kopplungsposition, bei welchem eine projezierte Positionsmarkierung 64, hier ein Fadenkreuz, eines Linienlasers auf die Platte 41 projiziert wird, um die richtige Kopplungsposition anzuzeigen. Alternativ kann ein entsprechendes Bild durch einen Projektor auf die Platte 41 projiziert werden.

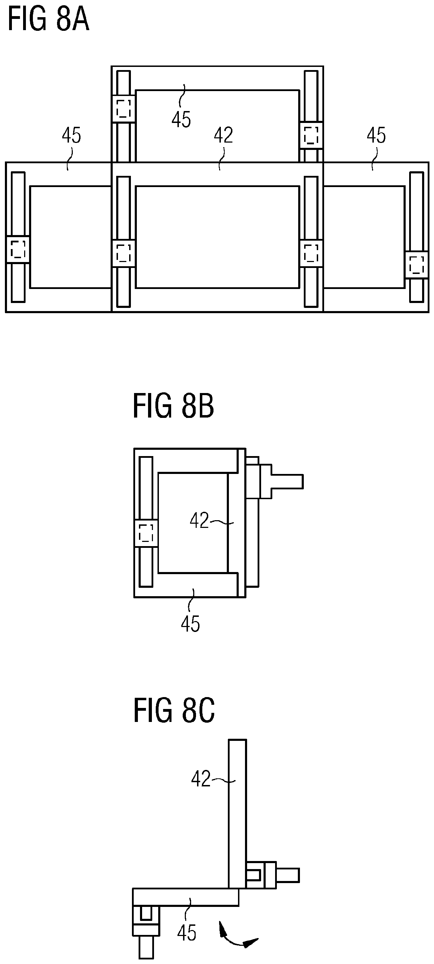

Figur 8A zeigt eine Frontansicht auf drei Erweiterungsrahmen 45, welche den Rahmen 42, wie er im Kontext der Figuren 5A und 5B erläutert wurde, seitlich und nach oben erweitern. Wie aus Figur 8A ersichtlich, ist jeder Erweiterungsrahmen 45 seinerseits mit Führungen und Adaptierungen zum Einsetzen eines Prüfschiebers ausgerüstet. Die Erweiterungsrahmen 45 können temporär an den Rahmen 42 angebracht werden, falls der Abstand zwischen Stellschieber und Prüfschieber größer ist, als dies durch die ursprüngliche Auslegung des Rahmens 42 vorgesehen war. Die Erweiterungsrahmen 45 können jedoch auch vormontiert und nach hinten weg klappbar sein, wie dies aus der Seitenansicht in Figur 8B und der Aufsicht in Figur 8C hervorgeht.

Grundsätzlich können die in den Figuren 5A, 5B, 8A, 8B, 8C gezeigten Adaptierungen 81, 91 vorteilhafterweise mit einem ergonomisch angebrachten Griff versehen sein, welcher einen Knopf oder Schalter aufweist, welcher mechanisch oder elektrisch im gedrückten Zustand eine Klemmung der Adaptierung 81, 91 an den Rahmen 42 bzw. den Erweiterungsrahmen 45 löst. Zusätzlich kann hierbei auch die Klemmung des Rahmens 42 auf dem Wagen gelöst werden, so dass die Adaptierung 81, 91 in zwei Dimensionen in die erforderliche Kopplungsposition für den Prüfschieber geführt werden kann. Ergänzend kann hierbei auch die Klemmung des Wagens auf der horizontalen Linearführung gelöst werden, so dass die Adaptierung 81, 91 in drei Dimensionen in die erforderliche Kopplungsposition für den Prüfschieber geführt werden kann. Beim Loslassen des Knopfes oder Schalters der Adaptierung wird sofort wieder geklemmt, so dass die Adaptierung 81, 91 in der gewählten Position verharrt.

Die entsprechenden Bewegungen können jedoch auch mit elektrischen Linearachsen automatisiert durchgeführt werden. Bei den zuvor genannten Linearachsen und Linearantrieben handelt es sich beispielsweise um elektrische oder hydraulische Linearantriebe, Linearmotoren oder Linearaktuatoren. Jeder dieser Linearachsen kann auch durch manuelle Einstellvorrichtungen zum Verschieben und Klemmen auf der jeweiligen Linearführung ersetzt werden.

Bei den zuvor genannten Führungen und Linearführungen handelt es sich beispielsweise um Lineargleitlager, Schwalbenschwanzführungen, Profilschienenführungen oder Käfigschienenführungen.

Die in den Figuren 3A, 3B, 3C, 5A und 5B gezeigte Linearachse 7, welche den Wagen 43 antreibt, dient der Simulation der Weichenzungenbewegung am Prüfstand 2. Die folgenden Ausführungen beziehen sich auf die entsprechenden Ausführungsbeispiele. Die mit der Linearachse 7 durchgeführte Bewegung ahmt die durch den Stellschieber 13 hervorgerufene Querbewegung der Weichenzunge am Gleis nach. Diese Bewegung erfolgt innerhalb des Bewegungszeitraumes des Stellschiebers 13, ist aber prinzipiell unabhängig davon. Die Bewegung des Stellschiebers 13 dient nicht nur zum Versetzen der Weichenzunge, sondern löst im Vorlauf auch den Verschluss der Weichenzunge (also das Element, das die Weichenzunge in der jeweiligen Endposition hält) bzw. schließt diesen nach Erreichen der Endposition. Daher ist der Verfahrweg des Stellschiebers 13 des Weichenantriebs 1 länger als der Bewegungsweg der Weichenzunge und damit des Prüfschiebers 17.

Die Lage des Prüfschiebers 17 wird nur in den Endpositionen ausgewertet, so dass am Prüfstand 2 nur sicher gestellt sein muss, dass der Prüfschieber 17 vor dem Stellschieber 13 in die anzufahrende Endlage gebracht worden ist. Die Ansteuerung der Linearachse 7 kann als separates Steuerprogramm ausgeführt werden, welches durch ein allgemeines Prüfprogramm aufgerufen wird und dann den Prüfschieber 17 in die vorher definierte andere Endlage verfährt. Alternativ kann die Bewegung der Linearachse 7 direkt aus einem Prüfprogramm heraus gesteuert werden.

Zur Ausführung der Steuerprogramme und/oder Prüfprogramme verfügt der Prüfstand 2 über mindestens eine geeignete Steuereinheit, beispielsweise eine speicherprogrammierbare Steuerung, ein Mikroprozessor oder eine elektrische oder elektronische Schaltung.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können frei miteinander kombiniert werden.

## Patentansprüche

1. Anordnung zur Prüfung von Weichenantrieben, **gekennzeichnet durch**:
- ein horizontales Bauteil (43), welches auf mindestens einer horizontalen Linearführung (6) verfahrbar gelagert ist,
- ein vertikales Bauteil (41, 42), welches senkrecht auf dem horizontalen Bauteil (43) montiert ist, quer zur horizontalen Linearführung (6) ausgerichtet ist und eine Aussparung aufweist, welche parallel zur horizontalen Linearführung (6) eine Durchführung eines Objekts erlaubt,
- wobei das vertikale Bauteil (41, 42) an einer Mehrzahl von Kopplungspositionen eingerichtet ist, eine Verbindung mit einem Befestigungsfuß (5) einzugehen,
- wobei der Befestigungsfuß (5) mit einem Prüfschieber (17) eines Weichenantriebs (1) verbunden ist, und
- wobei ein Stellschieber (13) eines Weichenantriebs (1) oder ein an den Stellschieber (13) des Weichenantriebs (1) gekoppeltes Bauelement durch die Aussparung in dem vertikalen Bauelement (41, 42) geführt ist.

2. Anordnung nach Anspruch 1,
- bei der das vertikale Bauteil (41, 42) aus magnetisierbarem Material ausgeführt ist, und
- bei der der Befestigungsfuß (5) ein Magnetfuß ist.

3. Anordnung nach Anspruch 1,
- bei der das vertikale Bauteil als Lochplatte (41) ausgeführt ist, welche ein Verschrauben des Befestigungsfußes (5) erlaubt.

4. Anordnung nach Anspruch 1,
- bei der das vertikale Bauteil als Rahmen (42) ausgeführt ist, welcher quer zur horizontalen Linearführung (6) auf dem horizontalen Bauteil (43) verfahrbar ist.

5. Anordnung nach Anspruch 4,
- bei der mindestens eine Seite des Rahmens (42) eine vertikale Führung (82, 92) aufweist, auf welcher der Befestigungsfuß (5) verfahrbar ist.

6. Anordnung nach Anspruch 5,
- bei der der Befestigungsfuß (5) auf der vertikalen Führung (82, 92) durch manuelles Verschieben verfahrbar ist,
- bei der der Befestigungsfuß (5) hierzu mit einem Bedienelement, insbesondere einem Knopf, ausgestattet ist,
- mechanisch und/oder elektrisch eingerichtet zur Aufhebung einer Klemmung des Befestigungsfußes (5) an den Rahmen (42) und Aufhebung einer Klemmung des Rahmens (42) an das horizontale Bauteil (43), bei Betätigung des Bedienelements, und
- mechanisch und/oder elektrisch eingerichtet zur Klemmung des Befestigungsfußes (5) an den Rahmen (42) und zur Klemmung des Rahmens (42) an das horizontale Bauteil (43), bei erneuter Betätigung des Bedienelements oder Loslassen des Bedienelements.

7. Anordnung nach Anspruch 5,
- bei der das horizontale Bauteil (43) einen Linearantrieb aufweist, welcher zum horizontalen Verfahren des Rahmens (42) eingerichtet ist,
- bei der der Rahmen (42) mindestens einen vertikalen Linearantrieb aufweist, welcher zum vertikalen Verfahren des Befestigungsfußes (5) auf der vertikalen Führung (82, 92) eingerichtet ist, sowie
- insbesondere mit einer programmierbaren Steuerung, mittels welcher der Befestigungsfuß (5) durch Ansteuerung der Linearantriebe in vorab einprogrammierte Kopplungspositionen in Abhängigkeit von Typen von Weichenantrieben (1) automatisiert verfahrbar ist.

8. Anordnung nach einem der Ansprüche 4 bis 7,
- mit mehreren Erweiterungsrahmen (45), welche links, rechts oder oben an dem Rahmen (42) montierbar sind, und wobei die Erweiterungsrahmen (45) insbesondere vormontiert und nach hinten wegklappbar sind.

9. Anordnung nach einem der Ansprüche 1 bis 8,
- mit einer elektronischen Anzeige, welche eine der Mehrzahl von Kopplungspositionen visuell kennzeichnet.

10. Anordnung nach Anspruch 9,
- bei der die elektronische Anzeige aus LED's (61, 62) gebildet wird, welche an jeder der Kopplungspositionen in das vertikale Bauteil (41) eingelassen sind, oder
- bei der die elektronische Anzeige aus LED's (61, 62) gebildet wird, welche an mindestens zwei Rändern des vertikalen Bauteils (41) derart angeordnet sind, dass sie Koordinaten der Kopplungspositionen visuell kennzeichnen, oder
- bei der die elektronische Anzeige ein Projektionssystem ist, insbesondere ein Linienlaser oder Projektor, welches zur Projektion der Kopplungspositionen auf das vertikale Bauteil (41, 42) eingerichtet ist.

11. Anordnung mit einem Adapter nach Anspruch 9 oder 10,
- mit einer Schaltung, insbesondere ein elektronischer Speicher, aus welcher die Kopplungspositionen in Abhängigkeit von Typen von Weichenantrieben (1) abrufbar sind, und
- mit einer Schaltung oder einer Recheneinheit, welche eingerichtet ist, nach Eingabe eines Weichenantrieb-Typs die elektronische Anzeige derart anzusteuern, dass sie die dem Weichenantrieb-Typ zugeordnete Kopplungsposition anzeigt.

12. Prüfstand zur Prüfung eines Weichenantriebs (1),
- auf dem eine Anordnung nach einem der Ansprüche 1 bis 11 montiert ist,
- wobei der Prüfstand (2) über einen Krafterzeuger (14) verfügt, welcher eingerichtet ist, um Gegenkräfte auf den Weichenantrieb (1) aufzubringen, während der Weichenantrieb (1) auf dem Prüfstand (2) Stellvorgänge ausführt, wodurch der Prüfstand (2) zum Einstellen und/oder Prüfen von Kräften, welche der Weichenantrieb (1) erzeugt, eingerichtet ist, und
- bei der der Krafterzeuger (14) und die Anordnung nach einem der Ansprüche 1 bis 11 mechanisch und elektrisch unabhängig voneinander sind, sodass ein Befestigungsfuß (5) ohne Beeinflussung des Prüfstands (2) oder des Krafterzeugers (14) mit der Anordnung nach einem der Ansprüche 1 bis 11 positionierbar ist, wodurch eine vorgegebene Kopplungsposition für den Prüfschieber (17) des Weichenantriebs (1) auf dem Prüfstand (2) einstellbar ist.

13. Verfahren zum Prüfen eines Weichenantriebs,
- bei dem eine Anordnung nach einem der Ansprüche 1 bis 11 auf einem Prüfstand (2) montiert ist,
- bei dem anhand eines Typs eines auf dem Prüfstand (2) zu prüfenden Weichenantriebs (1) eine vorgegebene Kopplungsposition für einen Prüfschieber (17) des Weichenantriebs (1) mit der Anordnung nach einem der Ansprüche 1 bis 11 ermittelt wird,
- bei dem ein Befestigungsfuß (5), welcher an der Anordnung nach einem der Ansprüche 1 bis 11 vormontiert ist, an die vorgegebene Kopplungsposition verfahren wird, oder bei dem der Befestigungsfuß an der vorgegebenen Kopplungsposition an der Anordnung nach einem der Ansprüche 1 bis 11 montiert wird,
- bei dem der Befestigungsfuß (5) mit einem Prüfschieber (17) eines Weichenantriebs (1) verbunden wird,
- bei dem ein Stellschieber (13) des Weichenantriebs (1) oder ein an den Stellschieber (13) des Weichenantriebs (1) gekoppeltes Bauelement durch die Aussparung in dem vertikalen Bauelement (41, 42) der Anordnung nach einem der Ansprüche 1 bis 11 geführt wird,
- bei dem der Prüfstand (2) über einen Krafterzeuger (14) Gegenkräfte auf den Weichenantrieb (1) aufbringt, während der Weichenantrieb (1) auf dem Prüfstand (2) Stellvorgänge ausführt, wobei Kräfte, welche der Weichenantrieb (1) erzeugt, eingestellt und/oder geprüft werden.

## Claims

1. Arrangement for the testing of switch mechanisms, **characterized by**:
- a horizontal component (43), which is mounted movably on at least one horizontal linear guide (6),
- a vertical component (41, 42), which is mounted perpendicularly on the horizontal component (43), is aligned transversely in relation to the horizontal linear guide (6) and has a clearance which allows an object to be led through parallel to the horizontal linear guide (6),
- wherein the vertical component (41, 42) is set up to enter into a connection with a fastening foot (5) at a plurality of coupling positions,
- wherein the fastening foot (5) is connected to a test slider (17) of a switch mechanism (1), and
- wherein an actuating slider (13) of a switch mechanism (1) or a component coupled to the actuating slider (13) of the switch mechanism (1) is led through the clearance in the vertical component (41, 42).

2. Arrangement according to Claim 1,
- in which the vertical component (41, 42) is made of magnetizable material, and
- in which the fastening foot (5) is a magnetic foot.

3. Arrangement according to Claim 1,
- in which the vertical component is configured as a perforated plate (41), which allows screwing of the fastening foot (5).

4. Arrangement according to Claim 1,
- in which the vertical component is configured as a frame (42), which is movable transversely in relation to the horizontal linear guide (6) on the horizontal component (43).

5. Arrangement according to Claim 4,
- in which at least one side of the frame (42) has a vertical guide (82, 92), on which the fastening foot (5) is movable.

6. Arrangement according to Claim 5,
- in which the fastening foot (5) is movable on the vertical guide (82, 92) by manual displacement,
- in which for this purpose the fastening foot (5) is equipped with an operator control element, in particular a button,
- which is mechanically and/or electrically set up for releasing a clamping of the fastening foot (5) to the frame (42) and releasing a clamping of the frame (42) to the horizontal component (43) when the operator control element is actuated, and
- which is mechanically and/or electrically set up for clamping the fastening foot (5) to the frame (42) and for clamping the frame (42) to the horizontal component (43) when the operator control element is actuated once more or the operator control element is let go.

7. Arrangement according to Claim 5,
- in which the horizontal component (43) has a linear drive, which is set up for the horizontal moving of the frame (42),
- in which the frame (42) has at least one vertical linear drive, which is set up for the vertical moving of the fastening foot (5) on the vertical guide (82, 92), and also
- in particular with a programmable controller, by means of which the fastening foot (5) can be moved in an automated manner into pre-programmed coupling positions, dependent on types of switch mechanisms (1), by activation of the linear drives.

8. Arrangement according to one of Claims 4 to 7,
- with a number of extension frames (45), which can be mounted on the left, the right or on top of the frame (42), and in particular with the extension frames (45) being pre-mounted and able to fold away to the rear.

9. Arrangement according to one of Claims 1 to 8,
- with an electronic display, which visually indicates one of the plurality of coupling positions.

10. Arrangement according to Claim 9,
- in which the electronic display is formed by LEDs (61, 62) which are inset in the vertical component (41) at each of the coupling positions, or
- in which the electronic display is formed by LEDs (61, 62) which are arranged at at least two edges of the vertical component (41) in such a way that they visually indicate coordinates of the coupling positions, or
- in which the electronic display is a projection system, in particular a line laser or projector, which is set up for the projection of the coupling positions onto the vertical component (41, 42).

11. Arrangement with an adapter according to Claim 9 or 10,
- with a circuit, in particular an electronic memory, from which the coupling positions, dependent on types of switch mechanisms (1), can be retrieved, and
- with a circuit or a computing unit, which is set up to activate the electronic display after input of a switch mechanism type in such a way that it displays the coupling position that is assigned to the switch mechanism type.

12. Test rig for the testing of a switch mechanism (1),
- on which an arrangement according to one of Claims 1 to 11 is mounted,
- the test rig (2) having a force generator (14), which is set up to apply opposing forces to the switch mechanism (1) while the switch mechanism (1) is performing actuating operations on the test rig (2), whereby the test rig (2) is set up for setting and/or testing forces that the switch mechanism (1) generates, and
- in which the force generator (14) and the arrangement according to one of Claims 1 to 11 are mechanically and electrically independent of one another, so that a fastening foot (5) can be positioned by the arrangement according to one of Claims 1 to 11 without influencing the test rig (2) or the force generator (14), whereby a prescribed coupling position for the test slider (17) of the switch mechanism (1) can be set on the test rig (2).

13. Method for testing a switch mechanism,
- in which an arrangement according to one of Claims 1 to 11 is mounted on a test rig (2),
- in which on the basis of a type of switch mechanism (1) to be tested on the test rig (2) a prescribed coupling position for a test slider (17) of the switch mechanism (1) is determined by the arrangement according to one of Claims 1 to 11,
- in which a fastening foot (5), which is pre-mounted on the arrangement according to one of Claims 1 to 11, is moved to the prescribed coupling position, or in which the fastening foot is mounted at the prescribed coupling position on the arrangement according to one of Claims 1 to 11,
- in which the fastening foot (5) is connected to a test slider (17) of a switch mechanism (1),
- in which an actuating slider (13) of the switch mechanism (1) or a component coupled to the actuating slider (13) of the switch mechanism (1) is led through the clearance in the vertical component (41, 42) of the arrangement according to one of Claims 1 to 11,
- in which the test rig (2) applies opposing forces to the switch mechanism (1) by way of a force generator (14) while the switch mechanism (1) is performing actuating operations on the test rig (2), with forces that the switch mechanism (1) generates being set and/or tested.

## Revendications

1. Agencement destiné à contrôler des commandes d'aiguillage, **caractérisé par** :
- un composant horizontal (43), qui est monté déplaçable sur au moins un guidage linéaire horizontal (6),
- un composant vertical (41, 42), qui est monté verticalement sur le composant horizontal (43), est orienté perpendiculairement au guidage linéaire horizontal (6) et présente un évidement permettant un passage d'un objet parallèlement au guidage linéaire horizontal (6),
- dans lequel le composant vertical (41, 42) est conçu afin de créer une liaison avec une patte de fixation (5) au niveau d'une pluralité de positions de couplage,
- dans lequel la patte de fixation (5) est reliée à un coulisseau de contrôle (17) d'une commande d'aiguillage (1), et
- dans lequel un coulisseau de réglage (13) d'une commande d'aiguillage (1) ou un élément, couplé au coulisseau de réglage (13) de la commande d'aiguillage (1), est guidé dans le composant vertical (41, 42) grâce à l'évidement.

2. Agencement selon la revendication 1,
- dans lequel le composant vertical (41, 42) est réalisé en matériau magnétisable, et
- dans lequel la patte de fixation (5) est une patte magnétique.

3. Agencement selon la revendication 1,
- dans lequel le composant vertical est réalisé sous la forme d'une plaque perforée (41) qui permet un vissage de la patte de fixation (5).

4. Agencement selon la revendication 1,
- dans lequel le composant vertical est réalisé sous la forme d'un châssis (42) qui peut être déplacé sur le composant horizontal (43) perpendiculairement au guidage linéaire horizontal (6).

5. Agencement selon la revendication 4,
- dans lequel au moins un côté du châssis (42) présente un guidage vertical (82, 92) sur lequel la patte de fixation (5) peut être déplacée.

6. Agencement selon la revendication 5,
- dans lequel la patte de fixation (5) peut être déplacée sur le guidage vertical (82, 92) grâce à un déport manuel,
- dans lequel la patte de fixation (5) est équipée pour cela d'un élément de commande, en particulier un bouton,
- conçu de manière mécanique et/ou électrique en vue d'une annulation d'un serrage de la patte de fixation (5) au niveau du châssis (42) et en vue d'une annulation d'un serrage du châssis (42) au niveau du composant horizontal (43), lors d'un actionnement de l'élément de commande, et
- conçu de manière mécanique et/ou électrique en vue d'un serrage de la patte de fixation (5) au niveau du châssis (42) et en vue d'un serrage du châssis (42) au niveau du composant horizontal (43), dans le cas d'un actionnement réitéré de l'élément de commande ou d'un désengagement de l'élément de commande.

7. Agencement selon la revendication 5,
- dans lequel le composant horizontal (43) présente un entraînement linéaire qui est conçu en vue d'un déplacement horizontal du châssis (42),
- dans lequel le châssis (42) présente au moins un entraînement linéaire vertical qui est conçu en vue d'un déplacement vertical de la patte de fixation (5) sur le guidage vertical (82, 92), ainsi que
- en particulier comprenant une commande programmable au moyen de laquelle la patte de fixation (5) peut être déplacée de manière automatisée en fonction des types des commandes d'aiguillage (1) dans des positions de couplage préalablement programmées grâce à un pilotage de l'entraînement linéaire.

8. Agencement selon l'une quelconque des revendications 4 à 7,
- comprenant plusieurs châssis d'extension (45), qui peuvent être montés à gauche, à droite ou au-dessus du châssis (42), et dans lequel les châssis d'extension (45) sont en particulier prémontés et peuvent être basculés vers l'arrière.

9. Agencement selon l'une quelconque des revendications 1 à 8,
- comprenant un affichage électronique qui indique de manière visuelle une parmi la pluralité de positions de couplage.

10. Agencement selon la revendication 9,
- dans lequel l'affichage électronique est formé de DEL (61, 62) qui sont insérées dans le composant vertical (41) au niveau de chacune des positions de couplage, ou
- dans lequel l'affichage électronique est formé de DEL (61, 62) qui sont agencées au niveau d'au moins deux bords du composant vertical (41) de telle manière qu'elles indiquent de manière visuelle des coordonnées des positions de couplage, ou
- dans lequel l'affichage électronique est un système de projection, en particulier un laser à lignes ou un projecteur, qui est conçu en vue d'une projection des positions de couplage sur le composant vertical (41, 42).

11. Agencement comprenant un adaptateur, selon la revendication 9 ou 10,
- comprenant un circuit, en particulier un enregistreur électronique, à partir duquel les positions de couplage peuvent être appelées en fonction des types des commandes d'aiguillage (1), et
- comprenant un circuit ou une unité de calcul qui est fourni(e) pour piloter l'affichage électronique après entrée du type de commande d'aiguillage de telle manière que celui-ci affiche la position de couplage associée au type de commande d'aiguillage.

12. Banc d'essai destiné à contrôler une commande d'aiguillage (1),
- sur lequel est monté un agencement selon l'une quelconque des revendications 1 à 11,
- dans lequel le banc d'essai (2) dispose d'un dispositif de production d'énergie (14) qui est conçu pour appliquer des forces antagonistes sur la commande d'aiguillage (1) pendant que la commande d'aiguillage (1) réalise des actions d'aiguillage sur le banc d'essai (2), grâce à quoi le banc d'essai (2) est conçu en vue d'un ajustement et/ou d'un contrôle de forces que produit la commande d'aiguillage (1), et
- dans lequel le dispositif de production de force (14) et l'agencement selon l'une quelconque des revendications 1 à 11 sont indépendants l'un de l'autre mécaniquement et électriquement, de sorte qu'une patte de fixation (5) peut être positionnée avec l'agencement selon l'une quelconque des revendications 1 à 11 sans influence du banc d'essai (2) ou du dispositif de production de force (14), grâce à quoi une position de couplage spécifiée pour le coulisseau de contrôle (17) de la commande d'aiguillage (1) peut être ajustée sur le banc d'essai (2).

13. Procédé de contrôle d'une commande d'aiguillage,
- dans lequel un agencement selon l'une quelconque des revendications 1 à 11 est monté sur un banc d'essai (2),
- dans lequel, à l'aide d'un type d'une commande d'aiguillage (1) à contrôler sur le banc de contrôle (2), une position de couplage spécifiée pour un coulisseau de contrôle (17) de la commande d'aiguillage (1) est déterminée avec l'agencement selon l'une quelconque des revendications 1 à 11,
- dans lequel une patte de fixation (5), qui est prémontée sur l'agencement selon l'une quelconque des revendications 1 à 11, est déplacée au niveau de la position de couplage spécifiée, ou dans lequel la patte de fixation est montée sur l'agencement selon l'une quelconque des revendications 1 à 11 au niveau de la position de couplage spécifiée,
- dans lequel la patte de fixation (5) est reliée à un coulisseau de contrôle (17) d'une commande d'aiguillage (1),
- dans lequel un coulisseau de réglage (13) de la commande d'aiguillage (1) ou un composant couplé au coulisseau de réglage (13) de la commande d'aiguillage (1) est guidé à travers l'évidement situé dans le composant vertical (41, 42) de l'agencement selon l'une quelconque des revendications 1 à 11,
- dans lequel le banc d'essai (2) applique, par l'intermédiaire d'un dispositif de génération de force (14), des forces antagonistes sur la commande d'aiguillage (1) pendant que la commande d'aiguillage (1) réalise des actions d'aiguillage sur le banc d'essai (2), des forces produites par la commande d'aiguillage (1) étant alors ajustées et/ou contrôlées.
